# EUROPEAN PATENT SPECIFICATION

(11) **EP 3 496 243 B1**
(45) Date of publication and mention of the grant of the patent: **01.12.2021**
(21) Application number: 17847881.4
(22) Date of filing: 20.01.2017
(51) Int. Cl.: H02K 7/116, H02K 7/00

(54) **INPUT SHAFT STRUCTURE HAVING CONNECTED MOTOR AND SPEED REDUCER**
EINGANGSWELLENSTRUKTUR MIT VERBUNDENEN MOTOR UND DREHZAHLMINDERER
STRUCTURE D'ARBRE D'ENTRÉE COMPRENANT UN MOTEUR ET UN RÉDUCTEUR DE VITESSE RELIÉS

(30) Priority: 09.09.2016 CN 201621047987 U
(43) Date of publication of application: 12.06.2019
(73) Proprietor: Jing-Jin Electric Technologies Co., Ltd, Beijing 100016 (CN)
(72) Inventor: WANG, Yongwu, Beijing 100016 (CN); YU, Ping, Beijing 100016 (CN); LI, Jianwen, Beijing 100016 (CN); LIU, Tianjiao, Beijing 100016 (CN); YANG, Xixian, Beijing 100016 (CN)
(74) Representative: Samson & Partner Patentanwälte mbB
(86) International application number: PCT/CN2017/071838
(87) International publication number: WO 2018/045705

(56) References cited:
- EP-A1- 2 819 277
- WO-A1-2015/144528
- WO-A2-2009/124892
- CN-B- 103 072 476
- CN-B- 103 072 476
- CN-C- 100 456 604
- CN-Y- 201 051 694
- JP-A- 2015 086 817
- US-A1- 2015 349 606

## Description

### TECHNICAL FIELD

The present disclosure relates to an input shaft structure for connecting a motor and a gearbox, for transmitting a torque between the motor and the gearbox.

### BACKGROUND

In electric vehicles, the motor shaft and the input shaft of the gearbox are main shafts independent of each other, which transmit the torque via splined connection. Such a transmission structure is relatively complicated, and increases the axial sizes of the gearbox and the motor, which is adverse to the layout of the entire vehicle, and has a larger weight.

A gear and a main shaft in the prior art are generally connected by a flat key, and the gear and the main shaft are clearance fitted or transition fitted, which cannot ensure the concentricity, which affects the stability of the system.

Besides, regarding fixation between a shaft and a hub, JP2015086817A discloses a solution concentrically fixing a shaft to a hub using a tapered bushing on one side.

In the Chinese invention patent CN 103072476B disclosing a rear axle electrodynamic force drive device of an electric vehicle. The drive device comprises a reducer shell, wherein the reducer shell is provided with two supports, the two supports support a differential shell, a second driven gear is fixed on the differential shell, a transmission shaft is arranged in the differential shell, a first driven gear and a second drive gear are fixed on the periphery of the transmission shaft, the second drive gear is meshed with the second driven gear, the reducer shell is provided with an end face, a cavity is formed on the end face, a shaft hole is formed in the bottom of the cavity, one end of an alternating current motor stator core is connected with the end face, the other end of the alternating current motor stator core is connected with a rear end cover, the rear end cover, the alternating current motor stator core and the reducer shell are fixed through bolts, one end of a rotor shaft of an alternating current motor supports on the rear end cover, the other end of the rotor shaft of the alternating current motor penetrates through the shaft hole to support on the reducer shell, the first drive gear is fixed on the rotor shaft of the alternating current motor, and the first drive gear is meshed with the first driven gear.

In the US invention patent application "ELECTRIC DEVICE, GEARBOX AND ASSOCIATED METHOD", US 2015/0349606 A1, disclosing a device includes an electric machine having a rotatable first shaft extending from an end of the machine. The device also includes a gearbox operably connected to the electric machine. The gearbox includes a first gear rotatably supported in the gearbox and a first gear connectable to the first shaft. The first gear is adapted to mesh with the second gear. The electric machine and the gearbox are adapt to drive a pump.

In the EP invention patent application "MOTOR DRIVE DEVICE FOR VEHICLES", EP 2 819 277 A1, disclosing a lightweight motor drive assembly for a vehicle is provided in which vibration is less likely to occur. The motor drive assembly includes an electric motor (3), a speed reducer (4) configured to reduce the rotation speed output from the electric motor (3), and a differential(5) configured to distribute the rotation output from the speed reducer (4) to right and left vehicle wheels. A rotor (7) of the electric motor (3) includes a spindle (17) rotatably supported by a first bearing (15) and a second bearing (16), and a rotor core (18) mounted on the outer periphery of the spindle (17). The spindle (17) includes a tubular, hollow, rotor core mounting portion (19) having an inner diameter larger than the diameter of a cylindrical first bearing fitting surface (24) on which the first bearing (15) is fitted. A first shaft portion (21) is coupled to an endplate (20) closing the end portion of the rotor core mounting portion (19) on the side of the rotor core mounted portion (19) close to the speed reducer (4).

In the PCT invention patent application "MOTORISED HUB FOR A MOTOR VEHICLE WITH AN ELECTRIC DRIVE", WO 2009/124892 A2 disclosing a motorised hub (1) for a motor vehicle with an electric drive, said motorized hub comprising a hub(9) intended to accommodate a wheel(2), the hub being rotationally mounted with respect to a hub carrier(7) about a hub axis(A), the motorised hub comprising an electric drive machine(3), the electric drive machine comprising an outer stator(32), which is secured to the hub carrier, and an inner rotor(31) of which the axis of rotation is remote from the hub axis and parallel to said hub axis, the motorised hub comprising reduction means(6) acting between the rotor of the electric machine and the hub, the motorised hub additionally comprising friction braking means, the braking rotor(5) being secured to the hub and arranged axially on the inner side of the vehicle with respect to the reduction means, the shaft of the rotor (31) of the electric machine being placed radially outside the braking rotor and extending axially from the reduction means towards the inside of the vehicle.

In the PCT invention patent application "MOTOR-DRIVEN HUB FOR AN ELECTRIC DRIVE VEHICLE", WO 2015/144528 A1, disclosing a motor driven hub for an electric drive motor vehicle, comprising a hub (3) for receiving a wheel, an electric drive machine (5) provided with a rotor shaft (6) and transmission means (10) which connect the rotor shaft (6) and the hub (3) and are provided with a drive gear (11), wherein the rotor shaft (6) and the drive gear (11) are coaxial. The rotor shaft (6) and the drive gear (11) are connected by a flexible intermediate means (29) for rotatable connection which includes an intermediate rotatable transmission shaft.

### SUMMARY

In view of the above problems, the present disclosure provides an input shaft structure for connecting a motor and a gearbox, in which the motor shaft and the input shaft of the gearbox are designed as an integral input shaft, which reduces the entire axial size of the power section, facilitates the layout of the entire vehicle, and has a smaller weight. A hub of the driving gear extends toward two sides, and an inner bore of the hub matches with a shaft diameter of the main shaft to perform radial positioning, to ensure a concentricity of the driving gear and the main shaft, which improves the stability of the system.

To achieve the above objects, the technical solutions of the present disclosure are realized as follows:
An input shaft structure for connecting a motor and a gearbox, wherein the input shaft structure comprises a main shaft, an input end of the main shaft is located within the motor, and is connected to a rotor of the motor, an output end of the main shaft is located within the gearbox, and is connected to a driving gear of the gearbox, and all of the two ends and an middle portion of the main shaft are provided with a bearing to perform axial positioning, a hub of the driving gear extends toward two sides, and an inner bore of the hub matches with a shaft diameter of the main shaft to perform radial positioning, to ensure a concentricity of the driving gear and the main shaft;
an inner bore of a right end of the hub is transition fitted or interference fitted to the main shaft, a bushing is provided between an inner bore of a left end of the hub and the main shaft, and the bushing, the inner bore of the left end of the hub and the main shaft form a transition fit or an interference fit.

Optionally, the main shaft is provided with a snap ring that clips the bushing, or the main shaft is provided with a tighten nut that fastens the bushing.

The bearing comprises a left-end bearing, a right-end bearing and a middle bearing.

The left-end bearing is fixedly installed on the gearbox housing, and the right-end bearing is fixedly installed on the motor housing; and a middle housing is provided between the motor and the gearbox, and the middle bearing is fixedly installed on the middle housing.

Optionally, the middle housing is provided, on the left of the middle bearing, with a pressure washer that presses an outer end face of the middle bearing, and is provided with an oil seal on the right of the middle bearing.

Optionally, the main shaft is provided with an external spline on the left of the middle bearing, the driving gear is provided with an internal spline, and the internal spline of the driving gear is connected to the external spline of the main shaft.

A right end of the hub of the driving gear presses an inner end face of the middle bearing, or a right end of the hub of the driving gear is provided with a shaft sleeve that presses an inner end face of the middle bearing.

Optionally, the main shaft is connected to the driving gear by a flat key, or the inner bore of the driving gear is an unthreaded hole, and is connected to the main shaft by interference fit or by welding.

The present disclosure, by using the above structure configuration, has the following advantages:
In the present disclosure, the motor shaft and the input shaft of the gearbox are designed as an integral input shaft, which has a simple structure, is convenient to install, reduces the entire axial size of the power section, facilitates the layout of the entire vehicle, and has a smaller weight.

In the present disclosure, a hub of the driving gear extends toward two sides, and an inner bore of the hub matches with a shaft diameter of the main shaft to perform radial positioning, to ensure a concentricity of the driving gear and the main shaft, which improves the stability of the system.

The above description is only an overview of the technical solutions of the present disclosure. In order to understand the technical means of the present disclosure more clearly, and to implement them according to the contents of the description, and in order to make the above and other objects, features and advantages of the present disclosure more fully understood, the particular embodiments of the present disclosure are provided below.

### BRIEF DESCRIPTION OF DRAWINGS

By reading the detailed description of the preferable embodiments below, various other advantages and benefits will become clear to a person skilled in the art. The drawings are only for the purpose of illustrating the preferable embodiments, and are not considered as limitation to the present disclosure. Furthermore, throughout the drawings, the same reference signs denote the same elements. In the drawings:
Fig. 1 is a sectional view of the present disclosure;
Fig. 2 is a sectional view of the main shaft employed in the present disclosure; and
Fig. 3 is a sectional view of the driving gear employed in the present disclosure.

In the drawings: 1. gearbox; 2. driving gear; 2-1. hub; 2-2. internal spline; 3. middle housing; 4. motor; 5. main shaft; 5-1. external spline; 5-2. clipping slot; 6. right-end bearing; 7. housing; 8. oil seal; 9. middle bearing; 10. pressure washer; 11. driven gear; 12. snap ring; 13. housing; 14. left-end bearing; and 15. bushing.

### DETAILED DESCRIPTION

The exemplary embodiments of the present disclosure will be described in further detail below by referring to the drawings. Although the drawings illustrate the exemplary embodiments of the present disclosure, it should be understood that, the present disclosure can be implemented in various forms, which should not be limited by the embodiments illustrated herein. In contrast, the purpose of providing those embodiments is to more clearly understand the present disclosure, and to completely convey the scope of the present disclosure to a person skilled in the art.

### The first embodiment

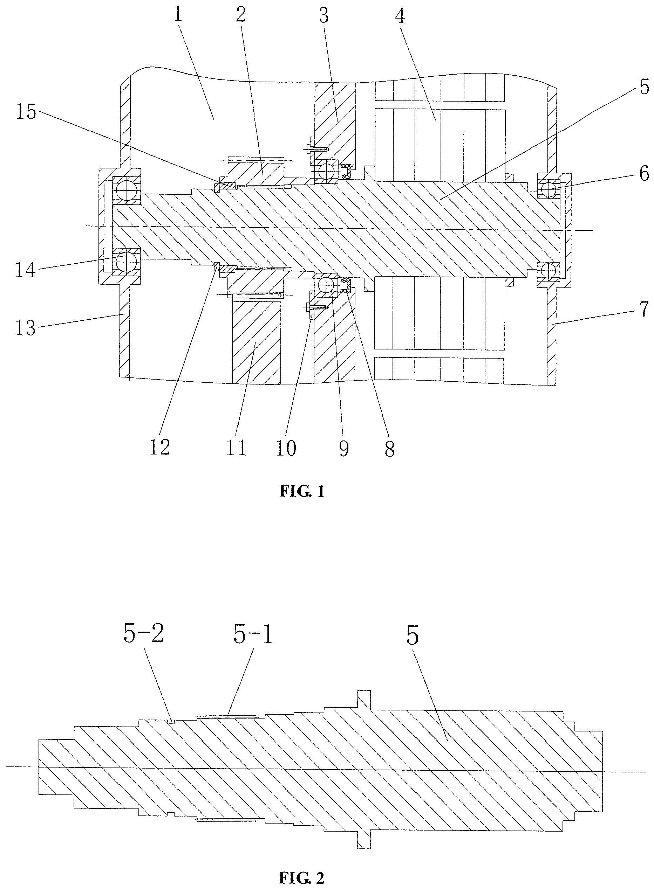

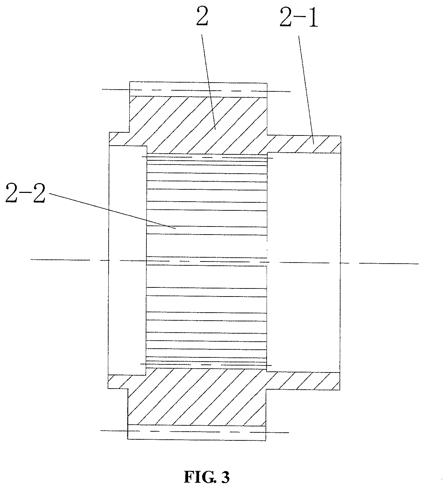

Figs. 1, 2 and 3 show one of the embodiments of the present disclosure. In the present embodiment, an input shaft structure for connecting a motor and a gearbox is provided, wherein the input shaft structure comprises a main shaft 5, the input end of the main shaft 5 is located within the motor 4, and is connected to a rotor of the motor 4, the output end of the main shaft 5 is located within the gearbox 1, and is connected to a driving gear 2 of the gearbox 1, and all of the two ends and the middle portion of the main shaft 5 are provided with a bearing to perform axial positioning, wherein a hub 2-1 of the driving gear 2 extends toward two sides, and an inner bore of the hub matches with the shaft diameter of the main shaft 5 to perform radial positioning, to ensure the concentricity of the driving gear 2 and the main shaft 5.

The gearbox 1 is usually provided with multiple-stage gears therein, for example, a driven gear 11 that engages with the driving gear 2, and other gears are not shown in the drawings.

An inner bore of the right end of the hub 2-1 is transition fitted or interference fitted to the main shaft 5, a bushing 15 is provided between an inner bore of the left end of the hub 2-1 and the main shaft 5, and the bushing 15, the inner bore of the left end of the hub 2-1 and the main shaft 5 form a transition fit or an interference fit.

The main shaft 5 is provided with a snap ring 12 that clips the bushing 15, and correspondingly the main shaft 5 is required to be provided with a clipping slot 5-2. Alternatively, the main shaft 5 is provided with a tighten nut that fastens the bushing 15, and correspondingly the main shaft 5 is required to be provided with a thread.

As shown in Fig. 1, the positioning bearing comprises a left-end bearing 14, a right-end bearing 6 and a middle bearing 9.

The left-end bearing 14 is fixedly installed on the gearbox housing 1, and the right-end bearing 6 is fixedly installed on the motor housing 4; and a middle housing 3 is provided between the motor 4 and the gearbox 1, the middle bearing 9 is fixedly installed on the middle housing 3, and correspondingly the middle housing 3 is required to be provided with an installation slot.

As shown in Fig. 1, the middle housing 3 is provided, on the left of the middle bearing 9, with a pressure washer 10 that presses the outer end face of the middle bearing 9, and is provided with an oil seal 8 on the right of the middle bearing 9. The oil seal 8 can prevent the lubricating oil in the gearbox 1 from entering the motor 4.

Because the oil seal 8 is provided on the right of the middle bearing 9, the middle bearing 9 may be lubricated by the lubricating oil in the gearbox 1, compared with the mode using fat lubrication in the prior art, it improves the service life of the bearing.

As shown in Figs. 1, 2 and 3, the main shaft 5 is provided with an external spline 5-1 on the left of the middle bearing 9, the driving gear 2 is provided with an internal spline 2-2, and the internal spline 2-2 of the driving gear 2 is connected to the external spline 5-1 of the main shaft 5.

The right end of the hub 2-1 of the driving gear 2 presses the inner end face of the middle bearing 9, or the right end of the hub 2-1 of the driving gear 2 is provided with a shaft sleeve that presses the inner end face of the middle bearing 9.

### The second embodiment

As different from the first embodiment, in the present embodiment, the following mode may replace the splined connection: the main shaft 5 and the driving gear 2 are connected by a flat key, or the inner bore of the driving gear 2 is an unthreaded hole, and is connected to the main shaft 5 by interference fit or by welding.

The above descriptions are merely preferable embodiments of the present disclosure, and are not limiting the protection scope of the present disclosure. Any modifications, equivalent substitutions or improvements are all included in the protection scope of the present disclosure provided that they are within the scope of the appended claims.

## Claims

1. An input shaft structure for connecting a motor and a gearbox, the input shaft structure comprises a main shaft (5), an input end of the main shaft (5) is located within the motor (4), and is connected to a rotor of the motor (4), an output end of the main shaft (5) is located within the gearbox (1), and is connected to a driving gear (2) of the gearbox (1), and all of the two ends and an middle portion of the main shaft (5) are provided with a bearing to perform axial positioning, a hub (2-1) of the driving gear (2) extends toward two sides, and an inner bore of the hub matches with a shaft diameter of the main shaft (5) to perform radial positioning, to ensure a concentricity of the driving gear (2) and the main shaft (5),
the bearing comprises a left-end bearing (14), a right-end bearing (6) and a middle bearing, the left-end bearing (14) is fixedly installed on the gearbox housing (1), and the right-end bearing (6) is fixedly installed on the motor housing (4), and a middle housing (3) is provided between the motor (4) and the gearbox (1), the middle bearing (9) is fixedly installed on the middle housing (3), **characterised in that**
a right end of the hub (2-1) of the driving gear (2) presses an inner end face of the middle bearing (9), or a right end of the hub (2-1) of the driving gear (2) is provided with a shaft sleeve that presses an inner end face of the middle bearing (9).

2. The input shaft structure according to claim 1, **characterized in that**: an inner bore of the right end of the hub (2-1) is transition fitted or interference fitted to the main shaft (5), a bushing (15) is provided between an inner bore of a left end of the hub (2-1) and the main shaft (5), and the bushing (15), the inner bore of the left end of the hub (2-1) and the main shaft (5) form a transition fit or an interference fit.

3. The input shaft structure according to claim 1, **characterized in that**: the main shaft is provided with a snap ring that clips the bushing, or the main shaft is provided with a tighten nut that fastens the bushing.

4. The input shaft structure according to claim 1, **characterized in that**: the left-end bearing (14) is fixedly installed on the gearbox housing, and the right-end bearing (6) is fixedly installed on the motor housing; and a middle housing (3) is provided between the motor (4) and the gearbox (1), and the middle bearing (9) is fixedly installed on the middle housing (3).

5. The input shaft structure according to claim 4, **characterized in that**: the middle housing (3) is provided, on the left of the middle bearing (9), with a pressure washer (10) that presses an outer end face of the middle bearing (9), and is provided with an oil seal (8) on the right of the middle bearing (9).

6. The input shaft structure according to claim 1, **characterized in that**: the main shaft (5) is provided with an external spline (5-1) on the left of the middle bearing (9), the driving gear (2) is provided with an internal spline (2-2), and the internal spline (2-2) of the driving gear (2) is connected to the external spline (5-1) of the main shaft (5).

7. The input shaft structure according to claim 1, **characterized in that**: the main shaft (5) is connected to the driving gear (2) by a flat key, or the inner bore of the driving gear (2) is an unthreaded hole, and is connected to the main shaft (5) by interference fit or by welding.

## Patentansprüche

1. Eingangswelleneinheit zum Verbinden eines Motors mit einem Getriebe, wobei die Eingangswelleneinheit Folgendes umfasst: eine Hauptwelle (5), wobei ein Eingangsende der Hauptwelle (5) innerhalb des Motors (4) angeordnet ist und mit einem Rotor des Motors (4) verbunden ist, wobei ein Ausgangsende der Hauptwelle (5) innerhalb des Getriebes (1) angeordnet ist und mit einem Antriebszahnrad (2) des Getriebes (1) verbunden ist, und wobei jedes der zwei Enden und ein mittlerer Abschnitt der Hauptwelle (5) mit einem Lager ausgestattet sind, um eine axiale Positionsfestlegung zu bewirken, wobei eine Nabe (2-1) des Antriebszahnrads (2) sich nach zweit Seiten erstreckt und eine Innenbohrung der Nabe mit einem Wellendurchmesser der Hauptwelle (5) zusammenpasst, um eine radiale Positionsfestlegung zu bewirken, um eine Konzentrizität des Antriebszahnrads (2) und der Hauptwelle (5) sicherzustellen,
wobei das Lager ein Lager am linken Ende (14), ein Lager am rechten Ende (6) und ein mittleres Lager umfasst und wobei das Lager am linken Ende (14) fest am Getriebegehäuse (1) montiert ist und das Lager am rechten Ende (6) fest am Motorgehäuse (4) montiert ist, und wobei ein Mittelgehäuse (3) zwischen dem Motor (4) und dem Getriebe (1) eingerichtet ist, wobei das mittlere Lager (9) fest am Mittelgehäuse (3) montiert ist, **dadurch gekennzeichnet, dass**
ein rechtes Ende der Nabe (2-1) des Antriebszahnrads (2) gegen eine innere Endfläche des mittleren Lagers (9) drückt, oder wobei ein rechtes Ende der Nabe (2-1) des Antriebszahnrads (2) mit einer Wellenhülse ausgestattet ist, die gegen eine innere Endfläche des mittleren Lagers (9) drückt.

2. Eingangswelleneinheit nach Anspruch 1, **dadurch gekennzeichnet, dass** eine Innenbohrung des rechten Endes der Nabe (2-1) durch Übergangspassung oder Presspassung an die Hauptwelle (5) angepasst ist, wobei zwischen einer Innenbohrung eines linken Endes der Nabe (2-1) und der Hauptwelle (5) eine Buchse (15) eingerichtet ist, und wobei die Buchse (15), die Innenbohrung des linken Endes der Nabe (2-1) und die Hauptwelle (5) eine Übergangspassung oder eine Presspassung bilden.

3. Eingangswelleneinheit nach Anspruch 1, **dadurch gekennzeichnet, dass** die Hauptwelle mit einem Seegerring ausgestattet ist, der die Buchse festklemmt, oder dass die Hauptwelle mit einer Befestigungsnut ausgestattet ist, die die Buchse fixiert.

4. Eingangswelleneinheit nach Anspruch 1, **dadurch gekennzeichnet, dass** das Lager am linken Ende (14) fest am Getriebegehäuse montiert ist und das Lager am rechten Ende (6) fest am Motorgehäuse montiert ist; und wobei ein Mittelgehäuse (3) zwischen dem Motor (4) und dem Getriebe (1) eingerichtet ist und das mittlere Lager (9) fest am Mittelgehäuse (3) montiert ist.

5. Eingangswelleneinheit nach Anspruch 4, **dadurch gekennzeichnet, dass** das Mittelgehäuse (3), links vom mittleren Lager (9), mit einem Druckdichtungsring (10) ausgestattet ist, der gegen eine äußere Endfläche des mittleren Lagers (9) drückt, und, rechts vom mittleren Lager (9), mit einer Öldichtung (8) ausgestattet ist.

6. Eingangswelleneinheit nach Anspruch 1, **dadurch gekennzeichnet, dass** die Hauptwelle (5) links vom mittleren Lager (9) mit einem Außenprofil (5-1) ausgestattet ist und das Antriebszahnrad (2) mit einem Innenprofil (2-2) ausgestattet ist, und wobei das Innenprofil (2-2) des Antriebszahnrads (2) mit dem Außenprofil (5-1) der Hauptwelle (5) verbunden ist.

7. Eingangswelleneinheit nach Anspruch 1, **dadurch gekennzeichnet, dass** die Hauptwelle (5) mit dem Antriebszahnrad (2) durch einen Flachkeil verbunden ist oder dass die Innenbohrung des Antriebszahnrads (2) ein Loch ohne Gewinde ist und mit der Hauptwelle (5) durch Presspassung oder durch Schweißen verbunden ist.

## Revendications

1. Structure d'arbre d'entrée pour relier un moteur et une boîte de vitesses, la structure d'arbre d'entrée comprend un arbre principal (5), une extrémité d'entrée de l'arbre principal (5) est située à l'intérieur du moteur (4) et est reliée à un rotor du moteur (4), une extrémité de sortie de l'arbre principal (5) est située à l'intérieur de la boîte de vitesses (1) et est reliée à un engrenage d'entraînement (2) de la boîte de vitesses (1), et l'ensemble des deux extrémités et d'une partie intermédiaire de l'arbre principal (5) sont pourvues d'un palier pour réaliser un positionnement axial, un moyeu (2-1) de l'engrenage d'entraînement (2) s'étend vers deux côtés, et un alésage intérieur du moyeu concorde avec un diamètre d'arbre de l'arbre principal (5) pour réaliser un positionnement radial, afin d'assurer une concentricité de l'engrenage d'entraînement (2) et de l'arbre principal (5),
le palier comprend un palier d'extrémité gauche (14), un palier d'extrémité droite (6) et un palier intermédiaire, le palier d'extrémité gauche (14) est installé de manière fixe sur le carter de la boîte de vitesses (1), et le palier d'extrémité droite (6) est installé de manière fixe sur le carter de moteur (4), et un carter intermédiaire (3) est prévu entre le moteur (4) et la boîte de vitesses (1), le palier intermédiaire (9) est installé de manière fixe sur le carter intermédiaire (3), **caractérisée en ce qu'**une extrémité droite du moyeu (2-1) de l'engrenage d'entraînement (2) appuie sur une face d'extrémité intérieure du palier intermédiaire (9), ou une extrémité droite du moyeu (2-1) de l'engrenage d'entraînement (2) est pourvue d'une chemise d'arbre qui appuie sur une face d'extrémité intérieure du palier intermédiaire (9).

2. Structure d'arbre d'entrée selon la revendication 1, **caractérisée en ce que** : un alésage intérieur de l'extrémité droite du moyeu (2-1) est monté par ajustement en transition ou monté par ajustement serré sur l'arbre principal (5), une douille (15) est prévue entre un alésage intérieur d'une extrémité gauche du moyeu (2-1) et l'arbre principal (5), et la douille (15), l'alésage intérieur de l'extrémité gauche du moyeu (2-1) et l'arbre principal (5) forment un ajustement de transition ou un ajustement serré.

3. Structure d'arbre d'entrée selon la revendication 1, **caractérisée en ce que** : l'arbre principal est pourvu d'un anneau élastique qui clipse la douille, ou l'arbre principal est pourvu d'un écrou de serrage qui fixe la douille.

4. Structure d'arbre d'entrée selon la revendication 1, **caractérisée en ce que** : le palier d'extrémité gauche (14) est installé de manière fixe sur le carter de la boîte de vitesses, et le palier d'extrémité droite (6) est installé de manière fixe sur le carter de moteur ; et un carter intermédiaire (3) est prévu entre le moteur (4) et la boîte de vitesses (1), et le palier intermédiaire (9) est installé de manière fixe sur le carter intermédiaire (3).

5. Structure d'arbre d'entrée selon la revendication 4, **caractérisée en ce que** : le carter intermédiaire (3) est pourvu, sur la gauche du palier intermédiaire (9), d'une rondelle de pression (10) qui appuie sur une face d'extrémité extérieure du palier intermédiaire (9), et est pourvu d'un joint d'huile (8) sur la droite du palier intermédiaire (9).

6. Structure d'arbre d'entrée selon la revendication 1, **caractérisée en ce que** : l'arbre principal (5) est pourvu d'une cannelure mâle (5-1) sur la gauche du palier intermédiaire (9), l'engrenage d'entraînement (2) est pourvu d'une cannelure femelle (2-2), et la cannelure femelle (2-2) de l'engrenage d'entraînement (2) est reliée à la cannelure mâle (5-1) de l'arbre principal (5).

7. Structure d'arbre d'entrée selon la revendication 1, **caractérisée en ce que** : l'arbre principal (5) est relié à l'engrenage d'entraînement (2) par une clavette plate, ou l'alésage intérieur de l'engrenage d'entraînement (2) est un trou non taraudé, et est relié à l'arbre principal (5) par ajustement serré ou par soudage.
